# EUROPEAN PATENT SPECIFICATION

(11) **EP 2 195 197 B1**
(45) Date of publication and mention of the grant of the patent: **21.08.2013**
(21) Application number: 08833714.2
(22) Date of filing: 29.09.2008
(51) Int. Cl.: B60K 35/00, B60K 37/06, H04B 1/08, H04M 1/60, B60R 11/02

(54) **VEHICLE MEDIA SYSTEM**
MEDIENSYSTEM FÜR EIN FAHRZEUG
SYSTÈME MULTIMÉDIA POUR VÉHICULE

(30) Priority: 28.09.2007 US 976172 P
(43) Date of publication of application: 16.06.2010
(73) Proprietor: Johnson Controls Technology Company, Holland, MI 49423 (US)
(72) Inventor: CHUTORASH, Richard, J., Oakland Township, MI 48306 (US); SUPANICH, Michael, A., Holland, MI 49424 (US); TRAINOR, James, E., Holland, MI 49424 (US); NAHIGIAN, Charles, G., Bloomfield Hills, MI 48302 (US)
(74) Representative: Schwöbel, Thilo K.
(86) International application number: PCT/US2008/078122
(87) International publication number: WO 2009/043005

(56) References cited:
- EP-A- 1 698 518
- GB-A- 2 392 039
- US-A1- 2005 005 298
- US-A1- 2007 061 067

## Description

### BACKGROUND

The present disclosure relates generally to the field of media systems. The disclosure relates more specifically, for example, to audio systems for vehicles. Examples of known disclosures comprise documents US 2005/005248 A1, US 2007/061067 A1, EP1698518 A1, and GB 2392039.

Vehicle manufacturers are attempting to reduce the components, size, weight, electrical power consumption, and price of vehicles in order to provide more energy efficient and lower cost vehicles. Conventional vehicle audio sources, such as CD players and conventional radio tuners, are a source of cost in the manufacture of the vehicle, require space on the dash board, add weight, and require power for operation.

Thus, it would be desirable to provide at least one of a lower cost, more compact, lighter weight, lower power and a lower cost audio system in a vehicle.

### SUMMARY

The invention relates to an audio system for a vehicle according to claim 1. The audio system comprises a communications interface configured to receive audio information from a portable media device and audio control electronics configured to process the received audio information, wherein the audio control electronics generates an audio output signal. The audio system further comprises an audio system interface configured to provide the audio output signal for use in controlling vehicle audio output devices, wherein the communications interface, audio control electronics, and audio system interface are housed separately from any audio source.

One example relates to a method for providing media output in a vehicle that does not include an integrated audio source. The method comprises receiving audio information from a portable media device via a communication interface, processing the received audio information to generate an output audio signal and providing the audio output signal to vehicle audio output devices via an audio system interface

One example relates to a vehicle. The vehicle comprises vehicle audio output devices and an audio system. The audio system includes a communications interface configured to receive audio information from a portable media device, and audio control electronics packaged separately from an audio source and configured to process the received audio information, wherein the audio control electronics generates an audio output signal. The audio system further includes an audio system interface configured to provide the audio output signal for use in controlling the vehicle audio output devices, wherein the vehicle does not include an integrated audio source.

### BRIEF DESCRIPTION OF THE DRAWINGS

FIG. 1 is a perspective view of a vehicle that includes a number of vehicle systems, including an audio system and a control system according to one example.

FIG. 2A is a front elevation view of a user interface of the control system of FIG. 1 according to one example.

FIG. 2B is a front elevation view of the user interface of the control system of FIG. 1 according to one example.

FIG. 3 is a front elevation view of the user interface of the control system of FIG. 1 according to one example.

FIG. 4A is a front elevation view of the user interface of the control system of FIG. 1 according to one exemplary embodiment.

FIG. 4B is a front elevation view of the user interface of the control system of FIG. 1 according to one exemplary embodiment.

FIG. 5 is a block diagram of the control system of FIG. 1 according to one example.

### DETAILED DESCRIPTION

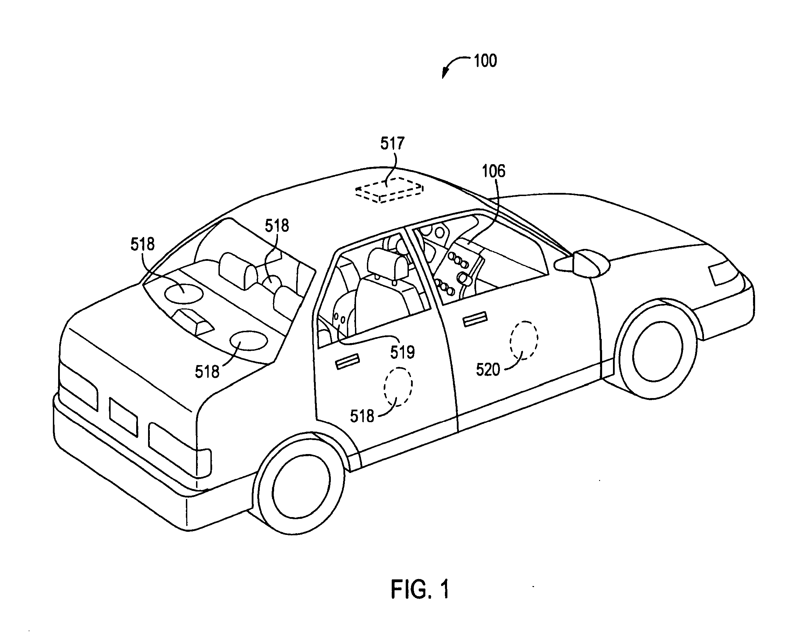

Referring to FIG. 1, a vehicle 100 can include a number of subsystems for user convenience. Vehicle 100 generally includes a heating, ventilation, and air-conditioning (HVAC) system, an audio system, and a control system 106. The HVAC system and audio system may be coupled to or integrated with control system 106, which is capable of controlling and monitoring one or both systems, automatically or by a manual or oral user command. It is noted that in various examples, vehicle 100, the HVAC system, and the audio system may be of any past, present, or future design that is capable of interacting with control system 106.

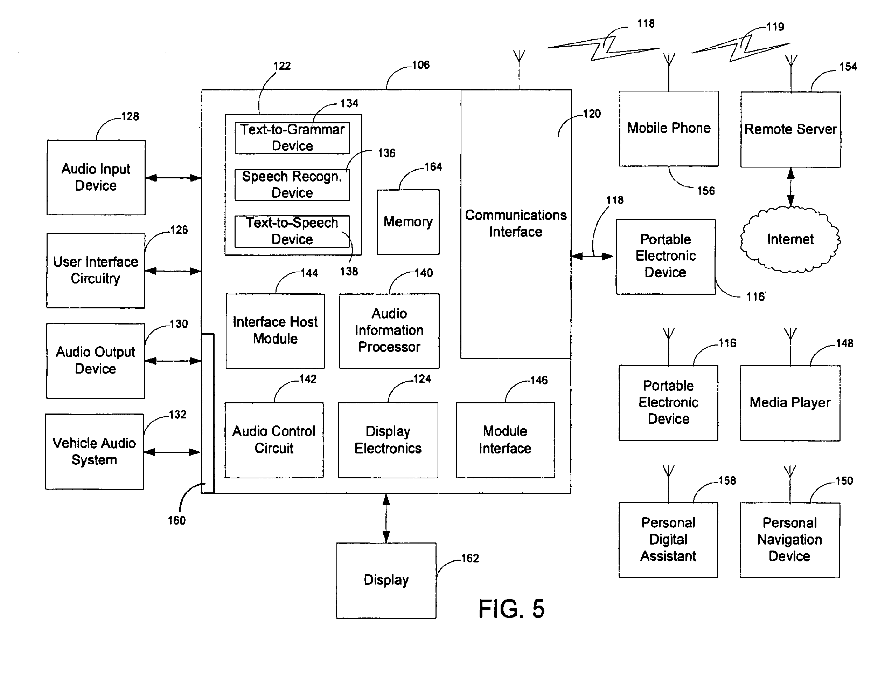

Vehicle 100 may include vehicle audio output devices 130 (see FIG. 5), such as one or more rear audio output devices (e.g., a speaker) 518 and one or more front audio output devices 520. According to an example, audio output devices 518, 520 include a plurality of audio speakers configured to provide a wide frequency range of audible sound output waves to the interior of vehicle 100. According to an example embodiment, audio output devices 518, 520 are the primary audio output devices of the vehicle 100. According to an example, the audio output devices 518, 520 may be wide bandwidth audio output devices separately or combined. For example, any single audio output device or any combined number of audio devices may be capable of providing a wide range (e.g., 80hz to 18khz @ 95db +-6db, etc.) of audio frequencies to the interior of vehicle 100. According to various other examples, audio output of vehicle 100. According various other audio devices 518, 520 may be of any past, present, or future design that is capable of accepting an audio signal to produce sound waves. It is noted that according to other examples, there may be more or fewer output devices or control devices than illustrated in FIG. 1. According to other examples, the output devices and/or control devices may be in different positions than shown in FIG. 1. For example, an output device may be located overhead near control device 517.

According to one example, vehicle 100 may be configured to not include an integrated audio source, such as a media playback device (e.g., CD player, MP3 player or any other type of playback device) or a broadcast device for receiving broadcast signals (e.g., radio signals, satellite radio signals or mobile TV network signals). This is in contrast to conventional vehicle manufacture, in which the vehicle is typically provided to the consumer with such an audio source. Instead, according to an example, the vehicle 100 can include an audio system that may be configured to play back media via one or more portable media devices coupled to the audio system via a physical or wireless communication connection, to provide media playback capability and broadcast media reception. Portable media devices used in conjunction with the audio system may include, for example, a digital media device 200, a portable electronic device 116, personal digital assistant (PDA) 158, a mobile phone 156, a remote server 154, a personal navigation device 150, a media player 148, or any other digital media player or any other remote source capable of providing audio information.

The audio system according to the present invention can be configured to receive audio information from the portable media device and provide audio output signals for use in controlling (e.g., driving) the vehicle audio output devices. The audio system can include, for example, a communications interface 120, audio control electronics 142 , user interface circuitry, and an audio system interface 160 (see FIG. 5), which may be housed separately from any audio source. The various components of control system 106 need not all be provided in the same housing and may be housed in one or more location separate from any audio source in vehicle 100.

The communications interface 120 can be configured to receive audio information from a portable media device. Communications interface 120 may receive audio information, or data files (e.g., text, numeric data, or any combination thereof) from various portable media devices.

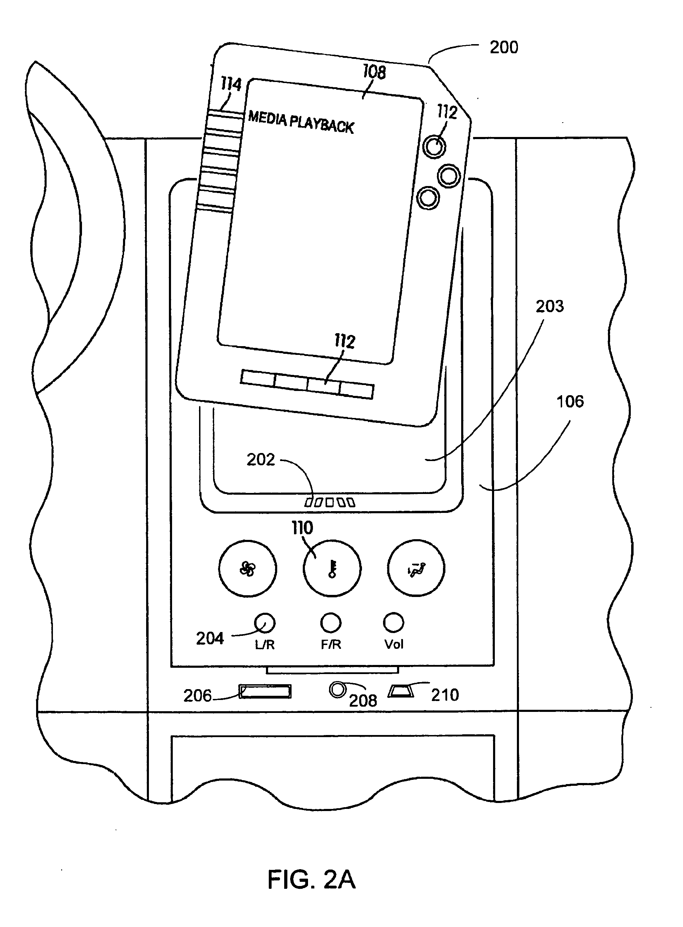

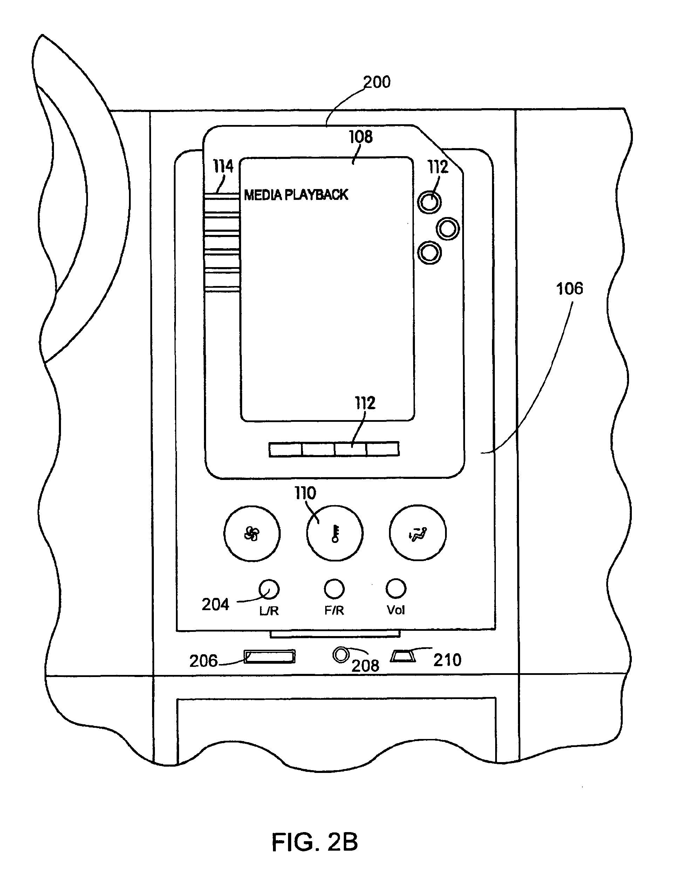

In an example, the communications interface 120 can include various physical input ports or may be configured to receive information via a wireless communication connection. The physical input ports can include, for example, docking contacts 202, USB port 206, mini-jack port 208 and firewire port 210 configured to receive information from one or more portable media devices (see FIGS. 2A-B, 3 and 4). Various other physical ports, slots or contacts may be provided for any type of physical communication connection including optical technology, other serial or parallel port technology, or any other suitable physical communications link. The wireless communication connection can include, for example, an IEEE 802.11 connection, a Bluetooth® connection, a WiFi connection, a WiMax connection, cellular signal, a signal using Shared Wireless Access Protocol-Cord Access (SWAP-CA) protocol, or any other wireless connection. Communications interface 120 may also be configured to connect directly to the internet though remote server 154 or it may be configured to receive audio information from the server through an intermediate device, such as, mobile phone 156, or some other portable device capable of connecting to remote server 154 as illustrated by wireless communication signal 119.

Referring to FIGS. 2A-B, one example of control system 106 is shown with various ports provided by communications interface 120. Digital media device 200 may be coupled to communications interface 120 via docking contact 202 as part of a docking station 203. The docking station 203 may be integrated into any portion of vehicle 100 or control panel, or otherwise coupled to the communications interface 120. According to one example, digital media device 200 may be manually coupled by a user to communications system 120 via a physical connection or a wireless connection, or it may be automatically coupled via a wireless connection when within a predefined proximity of vehicle 100 (e.g., within 150 feet, within 100 feet, within 50 feet, within 20 feet, when placed inside vehicle 100, etc.). Digital media device 200 may include output display 108 and various inputs, including pushbuttons 112 and tactile user inputs or pushbuttons 114. Output display 108 may be configured to display data related to the control of digital media device 200, such as music selection, download and playback. In one example, output display 108 may be a touch-screen display, while in example, may be any other non-touch sensitive display. In still other examples, output display 108 may be of any technology (e.g. LCD, DLP, plasma, CRT), configuration (e.g. portrait or landscape), or shape (e.g. polygonal, curved, curvilinear). Digital media device 200 may include a radio tuner or any type of device capable of digital media storage or playback, such as MP3 players, mass storage devices, hard drives, digital media sticks, mobile phones, personal digital assistants, media players, digital audio player, etc. Front auxiliary control device 517 may be configured to provide the various ports for communications interface 120, to facilitate physical and wireless communication with remote devices, such as digital media device 200 (see FIG. 2A), and may be disposed anywhere in the vehicle (e.g., instrument panel, door panel, seat, armrest, overhead console, A-pillar. Digital media device 200 may be configured to playback media on the audio system when coupled to the communications interface 120 via physical or wireless connections. The user may select media for playback using the controls on digital media device 200 or via vocal commands and the media may then be played back on the audio system.

The audio control electronics can be configured to process the received audio information and generate an audio output signal. In an example, the audio control electronics can include at least one of an audio information processor 140, an audio control circuit 142, and an interface host module 144. Audio control circuit 142, audio information processor 140 and interface host module 144 may be implemented in one or more processing circuits, including one or more integrated circuits, general purpose processors, application specific integrated circuits, field programmable gate arrays, etc. The processing electronics, modules, circuits, etc., may be implemented using computer code stored in a memory device and executable by the processing circuit. Audio information processor 140 may be configured to receive communication information from communications interface 120 and to process and/or decode the communication information using a compressed audio decoder, a digital to analog converter or any other type of audio processing components. The information processed by audio information processor 140 is provided to audio control circuit 142. Audio control circuit 142 is coupled to user interface circuitry 126, which is configured to receive and process inputs from users for manipulating audio output signals. Audio control circuit 142 may further be used to facilitate any number of audio related features, including front-to-rear or rear-to-front communications features. Interface host module 144 may be configured to provide source arbitration by coordinating communication when multiple devices are connected through communications interface 120. Interface module 144 may be configured to include classes, objects, functions, application program interfaces (APIs), computer code, etc., for interpreting information from the remote devices, and for interpreting commands from the audio control circuit or speech recognition for sending to the remote devices. One or more of audio information processor 140, audio control circuit 142, and interface host module 144 may be coupled to memory 164 for storing data, code, programs, or any other type of information capable of memory storage. Memory 164 may include at least one of volatile or non-volatile memory. After processing and manipulation, audio control circuit 142 provides an audio output signal to audio system interface 160.

The user interface circuitry 126 can be configured to manipulate the audio output signal. In an example, the user interface circuitry can include pushbuttons or rotatable knobs as in the example of FIGS. 2A-B, 3 and 4 in any similar or dissimilar configuration or may include other tactile user contact points. User interface circuitry 126 may be disposed anywhere in vehicle 100, including an overhead console, the center of an instrument panel, a door panel, an A-pillar, steering wheel, armrest, seat, etc. The user may control the balance, fade, volume, treble and base inputs using knobs 204. Instead of knobs 204, user interface elements 126 may be pushbuttons, tactile user input buttons, touch screen buttons on a touch screen display or oral commands. According to various examples, user interface elements 126 may also be capable of other vehicle system control (e.g., HVAC). Front auxiliary control device 517 may be configured to provide knobs 110 for user manipulation of the audio signal, including knobs, pushbuttons or other input mechanisms adjusting balance, fade, volume, treble, base and on/off functionally. Front auxiliary control device 517 may be configured to provide the various ports for communications interface 120, to facilitate physical and wireless communication with remote devices, such as digital media device 200 (see FIG. 2A), and may be disposed anywhere in the vehicle (e.g., instrument panel, door panel, seat, armrest, overhead console, A-pillar).

The audio system interface 160 can be configured to provide the audio output signal for using and controlling the vehicle audio output devices. The audio system interface 160 can include various ports, contacts, slots or connectors for coupling to audio output device 130 and/or vehicle audio system 132. Audio system interface 160 can be configured to receive an audio output signal from audio control circuit 142. Audio system interface provides the audio output signal to audio output device 130 and/or vehicle audio system 132. Audio output device 130 may include speakers disposed anywhere throughout vehicle 100 configured to receive an audio output signal from audio system interface 160. Vehicle audio system 132 may include speakers and audio amplifiers disposed anywhere throughout vehicle 100, including the vehicle trunk and seat. Vehicle audio system 132, may be configured to switch between various audio inputs, mix audio input signals into an audio output signal, provide volume control, filtering, attenuation, and/or other audio-related features. Vehicle audio system 132 and its accompanying audio data or audio signals may be analog-based, digital-based, or any combination thereof. Vehicle audio system 132 may only include switching, processing, or routing electronics. According to yet other various examples, vehicle audio system 132 may include any number of amplifiers, or provide audio output signals to amplifiers. Vehicle audio system 132 may include audio output devices 518, 520 or may provide signals to audio output devices 518, 520. Vehicle audio system 132 may be partially or entirely built into the control system 106 or be a stand-alone audio system that accepts control and audio inputs from control system 106 or the other components of vehicle 100. Vehicle audio system 132 may connect to the control system 106 via an interface module (shown as the lines connecting control system 106 and vehicle audio system 132 in FIG 5) of control system 106. Vehicle audio system 132 may be coupled to control system 106 via any physical or wireless communication connection as described above. According to an example, audio system 106 is any audio system of the past, present or future that accepts audio inputs and has an audio output capability.

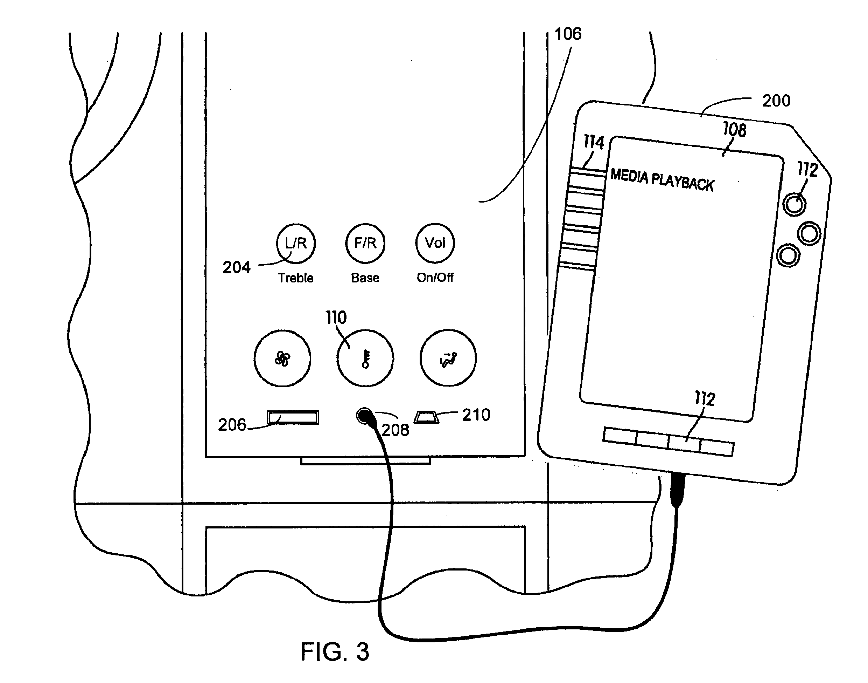

Referring to FIG. 3, one example of control system 106 is shown. Control system 106 may include various physical input ports, including miniature jack input port 208, USB port 206, and firewire input 210 configured to receive information from digital media device 200. Various other physical ports, slots or contacts may be provided for any type of physical communication connection. Control system 106 may be configured to receive information from digital media device 200 via wireless communication (e.g., an IEEE 802.11 connection, a Bluetooth® connection, a WiFi connection, a WiMax connection, or any other wireless connection). Further, digital media device may include a portable radio tuner or any type of device capable of digital media storage or playback, such as MP3 players, mass storage devices, hard drives, digital media sticks, mobile phones, personal digital assistants, media players, etc.

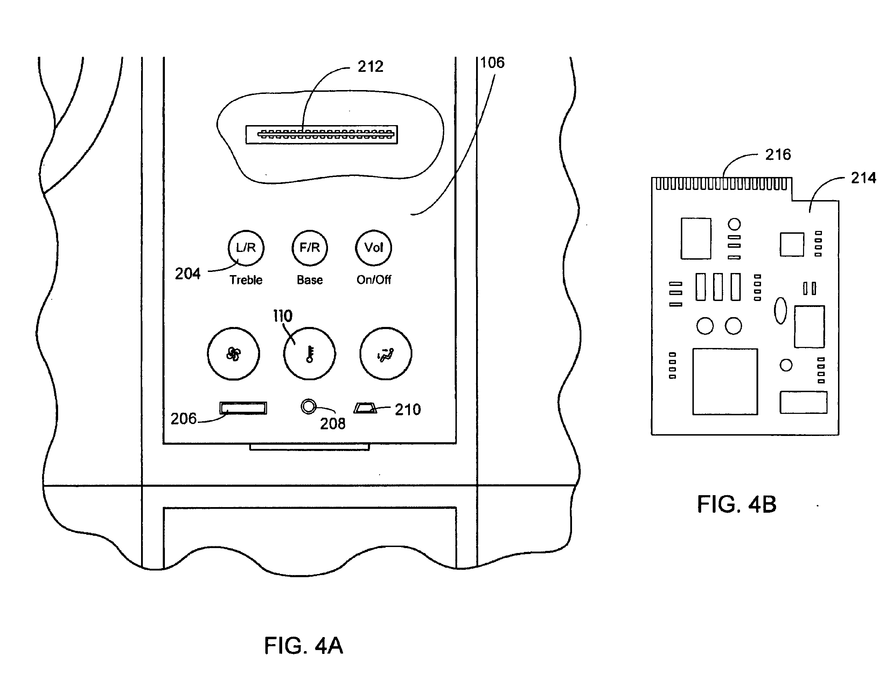

Referring to FIGS. 4A-B, vehicle 100 may not include an integrated broadcast device for receiving broadcast signals, such as radio signals, satellite radio signals, mobile TV network signals, etc. Instead, control system 106 may be configured to provide a module interface 212 that is integrated into the vehicle audio system and configured to receive plug-in electronics 214 configured to receive broadcast signals or other types of signals. Plug-in electronics 214 may be a printed circuit board (PCB) card, as illustrated in FIG. 4B. Plug-in electronics 214 may be a flexible circuit (e.g., flexible circuit board) wherein module interface 212 is configured to receive the flexible circuit. Plug-in electronics 214 may be any other type of card or circuit capable of being provided as a pluggable electronics module. In one exemplary embodiment, plug-in electronics 214 is a PCB card configured to be inserted into module interface 212. Module interface 212 comprises interface contacts for electrically coupling to plug-in electronics contacts 216. As illustrated in FIG. 4A-B, module interface 212 is provided behind the paneling comprising the interface for control system 106. Module interface 212 may be disposed any where in vehicle 100, including behind a interior panel in the dash board, door, seat, armrest, overhead console, A-pillar, etc. Ideally, module interface 212 would be located out of sight from a user in an enclosed area, however, module interface 212 is not limited to such configurations and may be visible to the user. Further, plug-in electronics 214 may have exposed electronic circuitry as shown in FIG. 4B, or it may be provided with a protective covering or packaging. Plug-in electronics may be configured to provide control system 106 with various reception capabilities, including standard AM/FM radio, HD radio, satellite radio, broadcast TV, internet access, etc., such that control system 106 is capable of providing audio output signals to audio output devices 518 and 520 corresponding to the received signals. Control system 106 may be configured with multiple module interfaces 212 for receiving a plurality of plug-in electronics 214.

Referring to FIG. 5, control system 106 may include communications interface 120, data processing system 122, display electronics 124, user interface circuitry 126, audio input device 128, audio output device 130, vehicle audio system 132, audio information processor 140, audio control circuit 142, interface host module 144, module interface 146, display 162 and memory 164.

Module interface 146 may be configure to couple plug-in electronics to control system 106, including audio control circuit 142, display electronics 124, audio information processor 140, data processing system 122 and interface host module 144. Similar to module interface 212, described above, module interface 146 may be configured to receive plug-in electronics configured to receive broadcast signals or other types of signals. The plug-in electronics may be a printed circuit board (PCB) card. The plug-in electronics may be a flexible circuit (e.g., flexible circuit board) wherein module interface 146 is configured to receive the flexible circuit. Further, plug-in electronics may be any other type of card or circuit capable of being provided as a pluggable electronics module. The data received from plug-in electronics may be processed by audio information processor 140 and provided to audio control circuit for further manipulation. Audio control circuit 142 is configured to provide an audio output signal to audio output device 130 or vehicle audio system 132 via audio system interface 160. Plug-in electronics may be configured to provide control system 106 with various reception capabilities, included standard AM/FM radio, HD radio, satellite radio, broadcast TV, internet access, etc, such that control system 106 is capable of providing audio output signals to audio output devices 518 and 520 corresponding to the received signals. Control system 106 may be configured with multiple module interfaces 146 for receiving a plurality of plug-in electronics. Further, module interface 146 may be configured to receive plug-in electronics capable of communicating with server 154.

Data processing system 122 is coupled to communications device 120 and may be configured to control each function of control system 106. Data processing system 122 may facilitates speech recognition capabilities of control system 106 for the convenience of the user. Data processing system 122 may include digital or analog processing components or be of any past, present, or future design that facilitates control of control system 106. Data processing system 122 may be a single data processing device having various hardware and/or software components or multiple data processing devices.

Data processing system 122 may include a text-to-grammar device 134, a speech recognition device 136, and a text-to-speech device 138. Text-to-grammar device 134 may be coupled to communications interface 120 and may be configured to generate a phonemic representation of the text and/or numeric data of each of the data files received by communications interface 120 from portable electronic device 116. The phonemic representation of the text and/or numeric data of each data file may be configured to facilitate speech recognition of each data file. After conversion of a data file to a phonemic representation, the data file may be accessed via an oral input command received by speech recognition device 136 via audio input device 128.

Speech recognition device 136 may be configured to receive an oral input command from a user via audio input device 128 or portable electronic device 116. Speech recognition device compares the received oral input command to a set of predetermined input commands, which may have been configured by text-to-grammar device 134. In various exemplary embodiments, the input commands may be related to the playback of a media file, the dialing or input of a phone book entry, the entry or listing of calendar or contact data, the control of the HVAC system, or any other desired function to be performed on data. According to various examples, the input command may be related to initiating, terminating and/or otherwise controlling front-to-rear communication functions. Speech recognition device 136 may determine an appropriate response to the oral input command received from the user, for example, whether the oral input command is a valid or invalid instruction, what command to execute, or any other appropriate response.

Text-to-speech device 138 may be configured to convert the text and/or numeric data of each data file received from portable electronic device 116 into an audible speech representation. This functionality may allow control system 106 to audibly give data to the user via audio output device 130 or the audio system. For example, control system 106 may repeat a user selected function back to the user, announce media file information, provide phonebook or contact information, or other information related to data stored in memory or portable electronic device.

Display electronics 124 is coupled to an output display 162 and may be configured to provide an electronic signal to the output display 162. In one example, the electronic signal may include the text and/or numeric data of the data files, while in other examples, any other desired data may be included with the text and/or numeric data or by itself in the electronic signal to the output display. In another example, display electronics 124 may be configured to control output display 162 with touch-screen capabilities, while in other examples, display electronics 124 may be configured to control output display 162 without making use of touch-screen capabilities. In still other examples, display electronics 124 may be of any past, present, or future design that allows for the control of output display 162. Further, portable electronic device 116 may be configured to provide an output display (e.g., display 108 of digital media device 200).

Further, vehicle 100 may include a built in display (e.g., display 162 in FIG. 5) configured to provide playback selections and media control options for portable electronic device 116 coupled to communications interface 120 as well as control options for other vehicle systems. Control system 106 may include knobs 110 configured: (i) to control functions of the HVAC system such as fan speed, cabin temperature, or routing of air flow, (ii) to control retrieval of phonebook entries, or (iii) to control any other desired vehicle function, such as hands-free phone use, contact or address/phone book management, calendar viewing/modification, and vehicle data logging. Control system 106 may include knobs 204 configured to control aspects of the audio output signal such as balance, fade, volume, treble, base and audio output power (e.g., on/off). Knobs 110 and 204 may be any type of input device, including pushbuttons, touch screen options, voice commands, etc. The operation of pushbutton 114 for media playback may display a media playback menu screen or execute commands that allow the user to view, select, sort, search for, and/or play audio or video files by tactile or oral command. Portable electronic device 116 may be configured with mobile phone capabilities, in which case, the operation of pushbutton 114 may be configured for hands-free phone operation and may display a menu screen or execute commands that allows the user to connect control system 106 to portable electronic device 116 so that speaking into the vehicle console of control system 106 operates the mobile phone capabilities of portable electronic device 116.

Audio input device 128, for example a microphone, is configured to receive the utterance of a user for transmission to data processing system 122 for speech recognition so that the functions of control system 106 may be operated by voice command. According to an example, audio input device 128 may be configured and used to receive user utterances for amplification to other users. Audio received by audio input device 128 may be sent to and from other systems and components of the vehicle such as control system 106, vehicle audio system 132, processor 122, memory, audio input device 128, audio output device 130, etc. The audio may be sent and received throughout the systems and components of vehicle 100 as audio data (e.g., audio signal(s), audio data, analog audio signal(s), digital audio signal(s), audio input signal(s), audio output signal(s), audio information, etc.). Regardless of whether the audio data or audio signal changes form, is processed, routed, amplified, attenuated, filtered or mixed, the terms "audio data" and "audio signal" may be used throughout this application to refer to any data or signal having an audio component. Audio output devices (e.g., audio output device 130, etc.) may be configured to provide the user with an audio prompt of various functions, such as user selection confirmation. According to an example, audio output devices may exist within or externally from the housing of control system 106.

The examples illustrated in the Figures are offered by way of example only. Accordingly, the present disclosure is not limited to a example, but extends to various modifications that nevertheless fall within the scope of the appended claims. The order or sequence of any processes or method steps may be varied or re-sequenced according to alternative examples.

Describing the disclosure with Figures should not be construed as imposing on the disclosure any limitations that may be present in the Figures. The present disclosure contemplates methods, systems and program products on any machine-readable media for accomplishing its operations. The examples of the present disclosure may be implemented using an existing computer processor(s), or by a special purpose computer processor for an appropriate vehicle system, incorporated for this or another purpose or by a hardwired system.

As noted above, examples within the scope of the present disclosure include program products comprising machine-readable media for carrying or having machine-executable instructions or data structures stored thereon. Such machine-readable media can be any available media which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions comprise, for example, instructions and data which cause a general purpose computer, special purpose computer, or special purpose processing machines to perform a certain function or group of functions.

It should be noted that although the diagrams herein may show a specific order of method steps, it is understood that the order of these steps may differ from what is depicted. Also, two or more steps may be performed concurrently or with partial concurrence. Such variation will depend on the software and hardware systems chosen and on designer choice. It is understood that all such variations are within the scope of the disclosure. Likewise, software implementations of the present disclosure could be accomplished with standard programming techniques with rule-based logic and other logic to accomplish the various connection steps, processing steps, comparison steps and decision steps.

The foregoing description of examples of the disclosure has been presented for purposes of illustration and description. It is not intended to be exhaustive or to limit the disclosure to the precise form disclosed, and modifications and variations are possible in light of the above teachings or may be acquired from practice of the disclosure. The examples were chosen and described in order to explain the principals of the disclosure and its practical application to enable one skilled in the art to utilize the disclosure in various examples and with various modifications as are suited to the particular use contemplated.

## Claims

1. An audio system for a vehicle (100), comprising: a communications interface (120) configured to receive audio information from a portable media device; audio control electronics (142) configured to process the received audio information, wherein the audio control electronics (142) generates an audio output signal; and an audio system interface (160) configured provide the audio output signal for use in controlling vehicle audio output devices (130); wherein the communications interface (120), audio control electronics (142), and audio system interface (160) are housed separately from any audio source, **characterized in that** the audio system further comprises a module interface (212) configured to receive plug-in electronics (214) in the form of a printed circuit board configured to receive and process a broadcast audio signal, wherein the plug-in electronics (214) is configured to be inserted into the module interface (212), wherein the module interface (212) comprises interface contacts for electrically coupling to plug-in electronics contacts (216) of the plug-in electronics (214), wherein the module interface (212) is disposed behind a panel of the vehicle (100), wherein the audio control electronics (142) include an audio control circuit, wherein the data received from the plug-in electronics (214) via the module interface (212) is provided to the audio control circuit for manipulation and output to the audio system interface (160) for further output by the vehicle audio output devices (130).

2. The audio system of claim 1, wherein the communications interface (120) receives audio information from the portable media device via a wireless connection.

3. The audio system of claim 2, wherein the wireless connection includes at least one of a WiFi connection, Bluetooth connection, IEEE 802.11 connection, and a WiMax connection.

4. The audio system of claim 1, wherein the communications interface (120) receives audio information from the portable media device via a physical communication connection.

5. The audio system of claim 4, wherein the physical communication connection includes at least one of a USB port, a miniature-jack port, a fire-wire port, and a docking contact.

6. The audio system of claim 1, wherein the audio control electronics (142) is configured to perform at least one of source arbitration and decoding of the audio information.

7. The audio system of claim 1, wherein the portable media device includes at least one of a mobile phone, personal digital assistant, media stick, mass storage device, MP3 player, digital audio player, radio tuner, navigation device, laptop, portable video player, a portable navigation device and a portable video game device.

8. The audio system of claim 1, further comprising user interface circuitry (126) coupled to the audio control electronics (142) and configured to manipulate the audio output signal based on signals from the user interface circuitry (126).

## Patentansprüche

1. Audiosystem für ein Fahrzeug (100), mit:
einer Kommunikationsschnittstelle (120), die konfiguriert ist, Audioinformationen von einer tragbaren Medienvorrichtung zu empfangen;
einer Audiosteuerelektronik (142), die konfiguriert ist, die empfangenen Audioinformationen zu verarbeiten,
wobei die Audiosteuerelektronik (142) ein Audioausgangssignal erzeugt; und
einer Audiosystemschnittstelle (160), die konfiguriert ist, das Audioausgangssignal zur Verwendung bei der Steuerung von Fahrzeugaudioausgabevorrichtungen (130) bereitzustellen;
wobei die Kommunikationsschnittstelle (120), die Audiosteuerelektronik (142) und die Audiosystemschnittstelle (160) getrennt von jeder Audioquelle untergebracht sind,
**dadurch gekennzeichnet, dass** das Audiosystem ferner eine Modulschnittstelle (212) aufweist, die konfiguriert ist, eine Einsteckelektronik (214) in der Form einer gedruckten Schaltung aufzunehmen, die konfiguriert ist,
ein Rundfunkaudiosignal zu empfangen und zu verarbeiten, wobei die Einsteckelektronik (214) konfiguriert ist, in die Modulschnittstelle (212) eingesetzt zu werden, wobei die Modulschnittstelle (212) Schnittstellenkontakte zur elektrischen Kopplung mit den Einsteckelektronikkontakten (216) der Einsteckelektronik (214) aufweist, wobei die Modulschnittstelle (212) hinter einem Armaturenbrett des Fahrzeugs (100) angeordnet ist, wobei die Audiosteuerelektronik (142) eine Audiosteuerschaltung aufweist, wobei die von der Einsteckelektronik (214) über die Modulschnittstelle (212) empfangenen Daten an die Audiosteuerschaltung zur Manipulation geliefert werden und an die Audiosystemschnittstelle (160) zur weiteren Ausgabe durch die Fahrzeugaudioausgabevorrichtungen (130) ausgegeben werden.

2. Audiosystem nach Anspruch 1, wobei die Kommunikationsschnittstelle (120) Audioinformationen von der tragbaren Medienvorrichtung über eine drahtlose Verbindung empfängt.

3. Audiosystem nach Anspruch 2, wobei die drahtlose Verbindung eine WiFi-Verbindung, eine Bluetooth-Verbindung, eine IEEE 802.11-Verbindung und/oder eine WiMax-Verbindung aufweist.

4. Audiosystem nach Anspruch 1, wobei die Kommunikationsschnittstelle (120) Audioinformationen von der tragbaren Medienvorrichtung über eine physische Kommunikationsverbindung empfängt.

5. Audiosystem nach Anspruch 4, wobei die physische Kommunikationsverbindung einen USB-Anschluss, einen Miniaturklinkenstecker-Anschluss, einen FireWire-Anschluss und/oder einen Andockkontakt aufweist.

6. Audiosystem nach Anspruch 1, wobei die Audiosteuerelektronik (142) konfiguriert ist, eine Quellenentscheidung und/oder eine Decodierung der Audioinformationen durchzuführen.

7. Audiosystem nach Anspruch 1, wobei die tragbare Medienvorrichtung Mobiltelefon, einen persönlichen digitalen Assistenten, einen Medien-Stick, eine Massenspeichervorrichtung, einen MP3-Player, einen digitalen Audiospieler, einen Radiotuner, eine Navigationsvorrichtung, einen Laptop, einen tragbaren Videospieler, eine tragbare Navigationsvorrichtung und/oder eine tragbare Videospielvorrichtung aufweist.

8. Audiosystem nach Anspruch 1, das ferner eine Benutzerschnittstellenschaltung (126) aufweist, die mit der Audiosteuerelektronik (142) gekoppelt und konfiguriert ist, das Audioausgangssignal beruhend auf Signalen von der Benutzerschnittstellenschaltung (126) zu manipulieren.

## Revendications

1. Système audio pour un véhicule (100), comprenant :
une interface de communication (120) conçue pour recevoir des informations audio d'un dispositif média portable ; une électronique de commande audio (142) conçue pour traiter les informations audio reçues,
laquelle électronique de commande audio (142) génère un signal de sortie audio ; et une interface de système audio (160) conçue pour fournir le signal de sortie audio en vue de son utilisation pour commander des dispositifs de sortie audio du véhicule (130) ; dans lequel l'interface de communication (120),
l'électronique de commande audio (142) et l'interface de système audio (160) sont logées séparément de toute source audio ; **caractérisé en ce que** le système audio comprend en outre une interface de module (212) conçue pour recevoir une électronique plug-in (214) sous forme d'une carte de circuit imprimé conçue pour recevoir et
traiter un signal audio de diffusion, dans lequel l'électronique plug-in (214) est conçue pour être insérée dans l'interface de module (212), dans lequel l'interface de module (212) comprend des contacts d'interface pour l'accouplement électrique à des contacts d'électronique plug-in (216) de l'électronique plug-in (214), dans lequel l'interface de module (212) est disposée derrière un panneau du véhicule (100),
dans lequel l'électronique de commande audio (142) comprend un circuit de commande audio, dans lequel les données reçues de l'électronique plug-in (214) via l'interface de module (212) sont envoyées au circuit de commande audio en vue de leur manipulation et de leur émission vers l'interface de système audio (160) afin d'être émises en outre par les dispositifs de sortie audio du véhicule (130).

2. Système audio selon la revendication 1, dans lequel l'interface de communication (120) reçoit des informations audio du dispositif média portable par une connexion sans fil.

3. Système audio selon la revendication 2, dans lequel la connexion sans fil comprend l'une au moins d'une connexion WiFi, d'une connexion Bluetooth, d'une connexion IEEE 802.11 et d'une connexion WiMax.

4. Système audio selon la revendication 1, dans lequel l'interface de communication (120) reçoit des informations audio du dispositif média portable via une connexion de communication physique.

5. Système audio selon la revendication 4, dans lequel la connexion de communication physique comprend l'un au moins d'un port USB, d'un port jack miniature, d'un port à cinq fils et d'un contact d'accueil.

6. Système audio selon la revendication 1, dans lequel l'électronique de commande audio (142) est conçue pour effectuer un arbitrage de source et/ou un décodage des informations audio.

7. Système audio selon la revendication 1, dans lequel le dispositif média portable comprend l'un au moins d'un téléphone mobile, d'un assistant personnel numérique, d'une clé USB, d'un dispositif de stockage de masse, d'un lecteur MP3, d'un lecteur audio numérique, d'un syntoniseur radio, d'un dispositif de navigation, d'un ordinateur portable, d'un lecteur vidéo portable, d'un dispositif de navigation portable et d'une console de jeu vidéo portable.

8. Système audio selon la revendication 1, comprenant en outre un circuit d'interface utilisateur (126) couplé à l'électronique de commande audio (142) et conçu pour manipuler le signal de sortie audio en fonction de signaux provenant du circuit d'interface utilisateur (126).
